(19) Europäisches Patentamt

European Patent Office

Office européen des brevets

(11) **EP 1 708 350 A2**

(12) **EUROPEAN PATENT APPLICATION**

(43) Date of publication:
**04.10.2006 Bulletin 2006/40**

(51) Int Cl.:
*H02M 7/219* (2006.01)

(21) Application number: **06251549.9**

(22) Date of filing: **23.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.03.2005 GB 0506442**

(71) Applicant: **E2V Technologies (UK) Limited Chelmsford, Essex CM1 2QU (GB)**

(72) Inventors:
• **Przbyla, Jan Chelmsford, Essex CM1 3LW (GB)**

• **Clare, Jonathan Charles University Park, Nottingham NG7 2RD (GB)**
• **Cook, David John University Park, Nottingham NG7 2RD (GB)**
• **Wheeler, Patrick William University Park, Nottingham NG7 2RD (GB)**
• **Catucci, Maurizio University Park, Nottingham NG7 2RD (GB)**

(74) Representative: **Lloyd, Patrick Alexander Desmond Reddie & Grose 16 Theobalds Road London WC1X 8PL (GB)**

(54) **AC-DC Converters**

(57) An AC to DC converter comprises a bi-directional switch array converter which converts a three phase AC supply at 50/60 Hz to a high frequency single phase drive for a series resonant parallel loaded tank. The tank is transformer coupled to a rectifier and filter to give a high voltage isolated DC supply to drive a load. The switching of the converter is based on control of the resonant tank to operate as close to a desired tank reference voltage as possible.

FIGURE 1

EP 1 708 350 A2

**Description**

FIELD OF THE INVENTION

This invention relates to AC-DC converters and in particular to converters providing a drive for a high frequency resonant tank.

BACKGROUND TO THE INVENTION

Matrix converters are well known for direct AC-AC conversion. Examples of matrix converters are discussed in M. Venturini and A. Alesina, "The generalised transformer: A new bidirectional sinusoidal waveform frequency converter with continuously adjustable input power factor", in Conf. Rec. IEEE PESC'80, pp. 242-252. A review of matrix converters may be found in Wheeler P W, Rodriguez J, Clare J C, Empringham L and Weinstein A, "Matrix converters: a technology review", IEEE Transactions on Industrial Electronics, Vol 49, No 2, pp 276-288, April 2002.

Direct power converters using a resonant circuit have been proposed to provide drive from a three-phase source to three-phase induction motors. An example is discussed in a paper entitled "Design and Performance of a High-Frequency Link Induction Motor Drive Operating at Unity Power Factor" by Sul et al, IEEE Trans.Ind.Applicat., vol 26, no.3 pp 434-440 May/June 1990. In this paper, source and load side matrix converters are connected through a single phase 20 kHz link. The link voltage is supported by a parallel resonant tank circuit and each switch of the converter has the capability of bi-directional current flow and voltage blocking.

Matrix converters such as that described in the Venturin and Wheeler papers above offer an all silicon solution for AC-AC conversion. The circuit consists of an array of bi-directional switches arranged so that any of the output lines of the converter can be connected to any of the input lines. A typical three-phase to three-phase converter has a matrix of nine bi-directional switches which allow any input phase to be connected to any output phase. The output waveform is then created using PWM modulation.

Matrix converters are inherently bi-directional and draw sinusoidal input currents. Depending on the modulation used, a unity displacement factor can be seen at the supply side irrespective of the type of load. The size of the power circuit is also compact compared to conventional technologies as no large capacitors or inductors are required.

SUMMARY OF THE INVENTION

We have appreciated that the concept of matrix converters can be adapted to AC to DC converters and, in its broadest form, the present invention resides in such a converter. One aspect of the invention provides an AC to DC converter comprising a resonant tank, and a switchable converter for driving the tank.

More specifically, in one aspect of the invention, there is provided an AC to DC converter comprising a resonant tank, a switchable converter comprising an array of bi-directional switches for driving the resonant tank, a rectifier coupled to the resonant tank, and a controller for controlling the resonant tank by controlling the state of the switchable converter on the basis of a predictive algorithm.

Embodiments of the invention have the advantage, that by use of a resonant tank circuit, the concept of matrix converters may be extended to provide an AC to DC converter with isolated high voltage output and soft-switching of the converter which can be used for a variety of applications, for example high voltage DC power supplies for high-energy accelerators.

Preferably, the resonant tank is a series resonant parallel loaded tank.

Preferably the switching converter converts a polyphase AC supply, typically a three phase supply operating at 50/60Hz, into a high frequency single phase supply, typically at around 2 to 200kHz and preferably around 20kHz. The resonant tank is excited at its resonant frequency, typically around 20 kHz to provide soft-switching of the converter. The converter switches state at about 40kHz, switching every half cycle of the converter output. For a single phase output, the switching state preferably changes at substantially twice the resonant frequency of the tank circuit.

In a preferred embodiment of the invention the series resonant parallel loaded tank is an LC circuit and the secondary transformer coil is arranged in parallel with the capacitor. The capacitance may be provided partially by the transformer and the inductance may be provided at least partially by the transformer.

We have also appreciated that it is desirable for the resonant tank to oscillate at constant amplitude. The oscillation amplitude is dependent on the manner in which the state of the switch of change, and a second aspect of the invention resides in control of the resonant tank.

More specifically, a second aspect of the invention provides an AC to DC converter, comprising a switchable converter coupled to a polyphase AC source, a resonant tank driven by a single phase output of the switchable converter, the resonant tank being transformer coupled to a rectifier, and a controller for switching the switchable converter to control the resonant tank.

In a preferred embodiment of the second aspect of the invention, the converter is controlled by controlling the resonant tank to operate as close to a reference voltage as possible. Preferably, this is achieved by using a predictive algorithm to control the state of an array of bi-directional switches which convert the polyphase AC input to a single phase high-frequency input to the resonant tank. In a further preferred embodiment the predictive algorithm applies sequences of states to the bi-directional switch array.

BRIEF DESCRIPTION OF DRAWINGS

Embodiments of the invention will now be described, by way of example only, and with reference to the accompanying drawings, in which:

Fig 1 is a schematic view of an AC-DC converter embodying the present invention;
Fig 2 is a circuit diagram showing the bi-directional switches of Fig 1 in more detail;
Fig 3 is a block diagram showing how the converter is controlled;
Figs 4a-4d show, respectively, input and output voltage and current waveforms obtained using a first predictive control algorithm;
Figures 5a-5d are similar waveforms to figure 4 showing the effect of changing to a second predictive control algorithm at a time, t;
Figure 6 is a block diagram of the controller and interface circuitry; and
Figure 7 is a flow chart showing an overview of the operation of the controller.

DESCRIPTION OF PREFERRED EMBODIMENTS

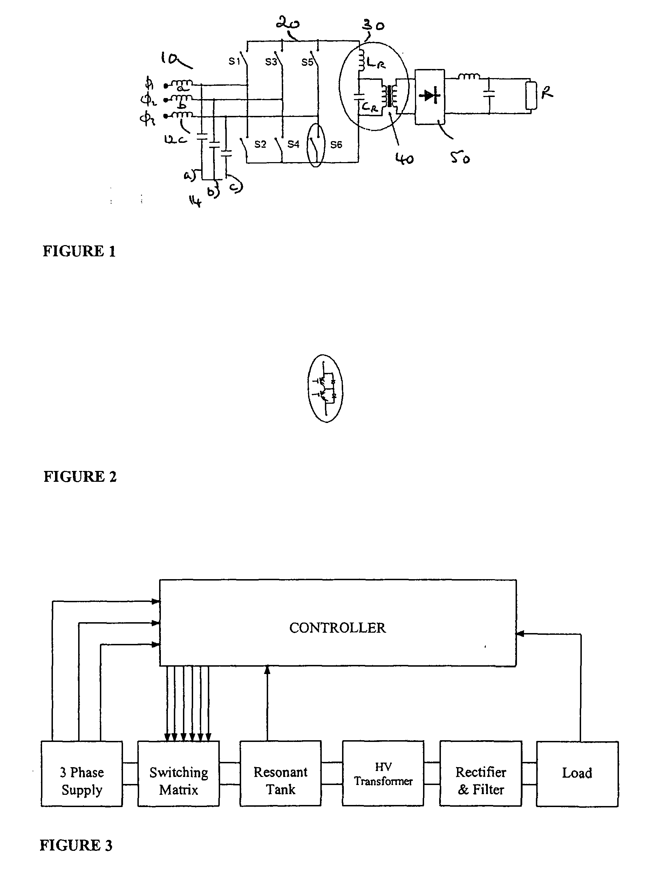

The direct power converter of figure 1 is particularly suited to providing high voltage DC power supplies for high power RF applications such as accelerators for high energy physics and associated applications, however it is believed to have a broad applicability and the present invention is not limited to any particular application.

The direct power converter shown comprises a three phase line filtered AC input 10, an input switch matrix 20, a resonant tank 30, a high frequency transformer 40 and an output filter/rectifier 50. The input 10 is a polyphase, in this case three phase, input but the invention is applicable to conversion of any AC source. Three phase is shown as it is the most commonly used. The input from each phase of the AC source is line filtered using a series inductor 12a,b,c and parallel capacitance 14a,b,c. The input matrix 20 comprises six bi-directional switches $S_1$ - $S_6$ with each AC input phase connected between a pair of the switches $S_1$, $S_2$; $LS_3$, $S_4$, and $S_5$ and $S_6$. The series resonant tank circuit $L_RC_R$ is coupled across the output of the switch matrix and the primary coil of the transformer is arranged in parallel with the capacitor $C_R$ of the series resonant tank circuit 30. The secondary coil of the output transformer drives the load R that includes the rectifier/filter circuit. As can be seen, the tank is a series resonant, parallel loaded tank which is transformer coupled to the rectifier. In this arrangement, at least some of the inductance and some of the capacitance are provided by the transformer.

It will be appreciated that the circuit shown in figure 1 is a schematic illustration for the purposes of explaining the concept underlying the invention. It assumes that the transformer is ideal. In practice, the transformer is not ideal and has parasitic inductive and capacitative components. It is desirable to use these parasitic components as part of the tank. Thus, in practice, the capacitance is across the secondary of the transformer and the inductance in series with the primary. In some cases the transformer may provide all of the inductances, as well as some of the capacitance. The resonant capacitance may also include the effective capacitance of rectifier diodes and any snubber capacitors used around them.

As an alternative to the resonant tank shown, an additional blocking capacitor may be used. The blocking capacitor may be arranged in series with the loaded capacitor.

The bi-directional switches switch the input voltages to apply voltage across the tank circuit $L_RC_R$ causing it to resonate and produce a sinusoidal voltage across the output transformer.

As the load includes the rectifier and filter, the current drawn by the load from the tank circuit approximates rectangular, with the degree of approximation depending on the size of the filter inductor. The edges of the current wave are controlled by the tank circuit crossing zero voltage.

The topology of the circuit constrains the voltage across the switches to that of the supply. This provides soft switching and reduces switching losses.

In a preferred embodiment, the six bi-directional switches are each formed from two IGBTs (Insulated Gate Bipolar Transistors) and associated diodes as illustrated in figure 2. Other devices are suitable and include MOSFETs, MCTs, and IGCTs. The requirement of the switch is that it is capable of blocking voltage and conducting current in both directions.

The switch shown in figure 2 is a common collector bi-directional switch in which the two transistors are arranged in anti-parallel and the two opposed diodes provide the reverse blocking capability. Alternatively, a common emitter IGBT pair could be used also with an opposed diode pair.

Returning to the tank circuit, the circuit magnifies the voltage applied to it and gives rise to a circulating current through the power devices. The resonant tank may be considered in terms of its Q or quality factor, with Q representing the magnification between the tank input and output. It is desirable to maintain Q low as it represents a level of circulating energy, which directly affects the rating of associated components. A higher Q provides flywheel energy storage that improves circuit operation.

Referring back to the switching assembly, in order to achieve soft switching there are two main considerations for the switching control. First, commutations between phases should occur at the zero crossings of the tank current; and second, DC ripple on the rectified output should be as small as possible. This may be particularly important for applications where a highly stable DC output is required. It is also desirable that the electrical stresses on the devices and the energy stored in the resonant tank be as low as possible and that the current drawn from the AC source has good power quality.

Considering the switching network of figure 1, and taking account the need to avoid short circuits of the input capacitors or open circuits of the tank, there are 9 allowable switching states as shown below in Table 1.

**Table 1**

| State | $S_1$ | $S_2$ | $S_3$ | $S_4$ | $S_5$ | $S_6$ | Voltage Applied |
|---|---|---|---|---|---|---|---|
| 1 | 1 | 0 | 0 | 1 | 0 | 0 | Vba |
| 2 | 0 | 1 | 1 | 0 | 0 | 0 | Vba |
| 3 | 1 | 0 | 0 | 0 | 1 | 0 | Vac |
| 4 | 0 | 1 | 0 | 0 | 0 | 1 | Vca |
| 5 | 0 | 0 | 1 | 0 | 0 | 1 | Vba |
| 6 | 0 | 0 | 0 | 1 | 1 | 0 | Vcb |
| 7 | 1 | 1 | 0 | 0 | 0 | 0 | 0 |
| 8 | 0 | 0 | 1 | 1 | 0 | 0 | 0 |
| 9 | 0 | 0 | 0 | 0 | 1 | 1 | 0 |

We have appreciated that a frequency at which the converter switching state changes in the region of 40 kHz is desirable in order to meet the commutation requirement mentioned above. Thus, the three phase AC supply is switched at 40 kHz to provide a single phase drive for a high frequency series resonant tank. In this embodiment the resonant frequency is preferably in the order of 20 kHz. The tank is transformer coupled to the rectifier filter to provide a high voltage isolated DC supply.

In the present embodiment, which has a single phase output, the frequency at which the converter switching state changes is twice the resonant tank frequency. It is desirable to make the resonant tank frequency as high as possible and the range of preferred converter switching state change frequencies is 4kHz to 400kHz with 40kHz being the presently preferred frequency. This corresponds to a range of resonant tank frequencies of 2kHz to 200kHz. A high frequency is desirable to make this output filter and transformer small. However, the limit is constrained by a number of factors including the time required to perform the control calculations to control switching, the switching losses, which are in practice never zero, the difficultly in performing switching with infinite temporal precision which becomes an issue at higher frequencies, and magnetic considerations.

Because the converter is switched to excite a high frequency resonant tank at its resonant frequency the converter is soft-switched. The switching state is determined, from the states available as shown in Table 1, by selecting the state that will keep the envelope of the tank oscillations as constant as possible.

In the table, the applied voltages refer to the voltages as the three input lines a, b and c. The converter can either apply zero volts to the tank by connecting both ends of the tank to the same input or can connect the ends to two different input lines. In this case the switch states of the converter can apply the difference between the voltages of two of the lines. Thus, in table 1 $V_{ba}$ refers to $V_b - V_a$, $V_{ab}$ to $V_a - V_b$ etc; $V_{ba} = - V_{ab}$.

Referring to figure 1, closing switch Sl will connect the top end of the tank to $V_a$ while closing $S_2$ will connect the bottom end to $V_a$ and so on. Thus, if S and $S_6$ are closed, the tank voltage will be $V_{ac}$, assuming the top is positive. If $S_2$ and $S_5$ are closed the voltage will be reversed, that is $V_{ca}$.

For the network to operate correctly only one of $S_1$, $S_3$ and $S_5$ and one of $S_2$, $S_4$ and $S_6$ must be closed otherwise either the input capacitors are short circuited or the output inductor is open-circuited, either of which will cause destruction.

We have appreciated that when operating with a low Q factor, the tank can be controlled successfully only by modelling the dynamics of the tank itself.

Control based on source current can achieve some resonance control but requires a high Q. This approach operates on the theory that the switches are controlled to draw constant power from the supply. If the power drawn is constant then it should be possible to keep the resonant tank oscillating at a constant amplitude. If this is the case, it should be possible to predict the current that will be drawn by the tank from the supply during the next half cycle. If this is combined with knowledge of the supply currents and capacitance used in the supply filter it is possible to predict the currents flowing into the input filter capacitors depending on the switching state of the switch matrix.

It follows that it is possible to predict the voltages across the capacitors that may arise from the different states and the D and Q components that may arise, where D and Q represent components expressed in a 2-axis reference frame system rotating at the supply angular frequency. From this is it possible to switch the matrix such that real power drawn by the converter is constant. If the D and Q references are equal in magnitude to that of an ideal three phase voltage supply, unit power factor will be drawn by switch to the state which will approximate at best this reference.

For decreasing Q, the energy stored in the resonant tank and the voltage gain of the resonant circuit both decrease. It is required that Q be set low, to reduce the energy delivered under fault conditions and to enable the tank components to be reasonable sized. For a low Q, the energy stored in the resonant tank, and hence the tank current for the net switching cycle, is not time invariant. Consequently, the peak tank current is more oscillatory due to errors in the controller predicting the optimum switching state. This leads to a higher than expected resonant capacitor voltage and unacceptable perturbations in the resonant tank. Thus, we have appreciated that source current control does not offer a suitable control for the resonant tank.

In the present embodiment we have identified the need to predict the behaviour of the resonant tank circuit to ensure that the DC ripple on the rectified output is minimised. Figure 3 is a general overview of a control regime based on modelling the operation of the resonant tank.

In view of these requirements, an output prediction control algorithm is used which considers the 9 possible input voltages that may be applied to the tank for the next tank half cycle and switches such that the tank operates as close to a reference level as possible. Thus, the envelope of the resonant tank is kept as constant as possible. The states are chosen by predicting the transient dynamics of the resonant tank in response to the applied voltage. This ensures that the voltage state applied to the tank is the optimum of those available.

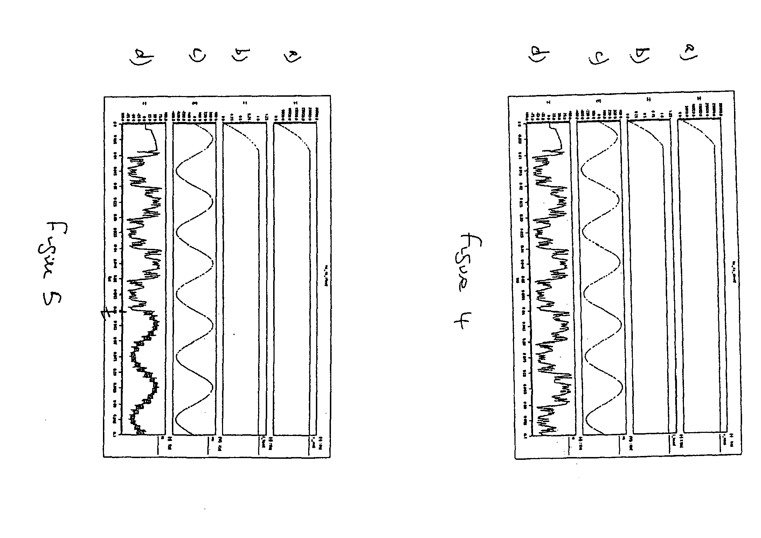

Figure 4 shows the rectified voltage (fig 4a), load voltage (fig 4b), input voltage and input current waveforms achieved with this method of output prediction. It can be seen that the input current waveform (fig 4d) is poor with low-frequency distortion.

A preferred approach to output prediction is to determine optimum state sequences rather than application of individual states. Figure 5 shows a comparison of the two approaches, in which the state sequence approach is enabled at a time t. It can be seen that the input current waveform is improved greatly.

The control algorithms will now be described in more detail.

The Predictive Tank Controller considers the operation of the resonant tank as opposed to the input current and voltage waveforms. If the tank can be controlled to have a constant amplitude envelope, the tank oscillations will be kept constant and there will be no low frequency fluctuations in the power. To do this, it is required to model the operation of the resonant tank, such that for a given applied voltage the corresponding resonant voltage and current waveforms can be deduced. It is then possible to calculate the set of possible resonant tank capacitor voltages corresponding to the possible set of voltages that can be applied by the switch front end. This allows the optimum switching state to be selected, minimising variations in the resonance in the tank.

We have found that the effect on this form of control on the input current waveform, as shown in figure 4d above arises due to the converter switching between two particular states for a disproportionate amount of time. In one example, the controller was found to switch repeatedly between states 1 and 2, applying Vab for a positive resonant tank inductor current and Vba for a negative one. This leads to a low-frequency ripple on the input power waveform but power into the converter is maintained. This results in distortion of the input current waveform, and consequently a low frequency ripple is observed on the resonant tank capacitor voltage.

The improvement shown in figure 5d) at time t is achieved by storing the previous switching state and using this to limit the choice of available switching states for the next cycle. This not only improves the input current spectrum, but also has the added benefit of replacing the low frequency components present in the output voltage with higher frequency components which are removed readily by filtering with a much smaller capacitor that would otherwise be required.

The input current wave form of figure 5d), after time t, is noticeably more sinusoidal. A frequency analysis shows that all even harmonics are eliminated, whilst the odd harmonics are significantly reduced. A considerable improvement in input current waveform has resulted from the high frequency modifications.

To minimise the ripple, the converter should aim to apply a voltage with as little deviation from an ideal case as possible. If the reference is too high, the converter will track too close to the envelope of the input three phase waveform, and a 300Hz component will be observed on the tank envelope. Conversely, if the reference is too low then the controller will apply more zero vectors and performance will be poor. For an ideal three phase waveform the ideal level occurs at:

$$\text{V\_ideal} = aV\_ideal = a\sqrt{3}x\frac{3}{4}$$

Where a is the input line-to-line voltage.

This will be the ideal voltage that the converter should aim to apply to the resonant tank. Consequently, the fundamental will occur at:

$$V\_idea\_fundamental = a\sqrt{3}x\frac{3}{4}Vx\frac{4}{\pi}$$

The rectified output of the converter is passed through an L-C filter before being connected to the load. The rectifier itself is of known construction. The tank is being driven such that it provides the best possible output state for converter operation. However, due to the discrete number of switching states at the input there will naturally be ripple in the resonant tank envelope, and consequently the rectified output voltage. It is also necessary to minimise energy storage in the circuit wherever possible including the output filter.

For a converter having an output operating at 25kV and 1A it is more important to reduce the capacitor size where possible rather than the inductor. Consequently, the inductance should be such that it is as large as reasonably possible. The inductance should be large enough that the controller can assume that the current drawn by the load will be constant for consecutive cycles. To achieve this, the current in the inductor should have a ripple less that 10%.

The controller can maintain control for varying load requirements, and zero load operation. In the case of zero load operations, the effective load resistance will tend to infinity. Consequently, the gain of the resonant tank will also tend to infinity. If this was to occur device/converter destruction would be inevitable. This problem can be overcome by addition of a second, high impedance load in parallel with the load, such that if the load to open circuit, the gain of the tank would be limited. This can then be further controlled by a voltage feedback loop to maintain the desired operating voltage.

In order to allow for component tolerances, thermal variations and ageing of components, the controller is provided with a phase lock loop (PLL) to accommodate changes in the resonant frequency of the tank. Dynamic performance is improved by initially using a fixed clock source to initiate resonance, and then switching to the PLL. This then allows for zero current commutation under normal operating conditions, thus reducing switching losses associated with current commutation.

Variations in converter gain, resulting from a change in the characteristic impedance and thus Q, are compensated for by a feedback voltage loop adjusting the demand voltage.

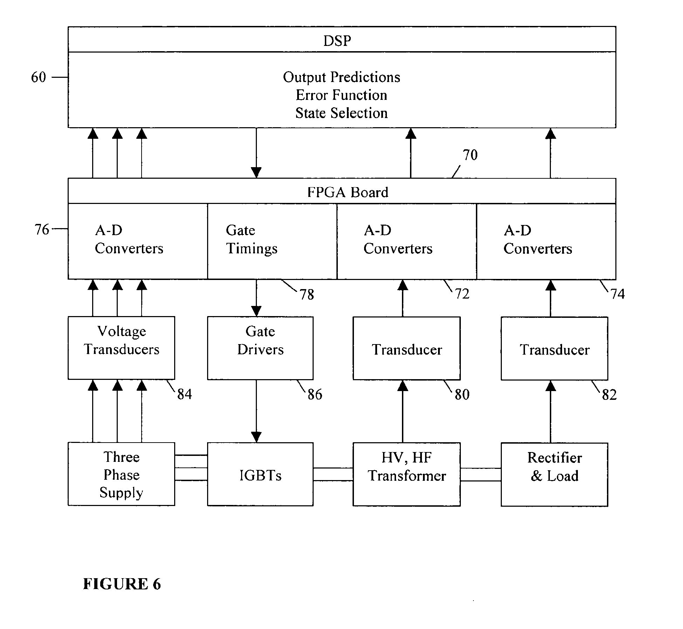

Figure 6 is an overview of the controller and the interface with the converter. In this instance the controller is a digital signal processor 60 which performs output prediction, error functions and switch state selection. The controller interfaces with components of the converter through interface 70 which includes A-D converters 72, 74 which, respectively, convert signals from the transformer, and the rectifier and load into digital signals for input to the DSP 60. Transducers 80, 82 are arranged between the A-D converters 72, 74 and the transformer and the rectifier and load. Further A-D converters 76 are provided on the interface to convert voltages from the three phase supply. Voltage transducers 84 are arranged between the AC supply and the A-D converters. Finally, gate timings 78 are provided to the IGBT switches from the interface via gate drive circuitry 86.

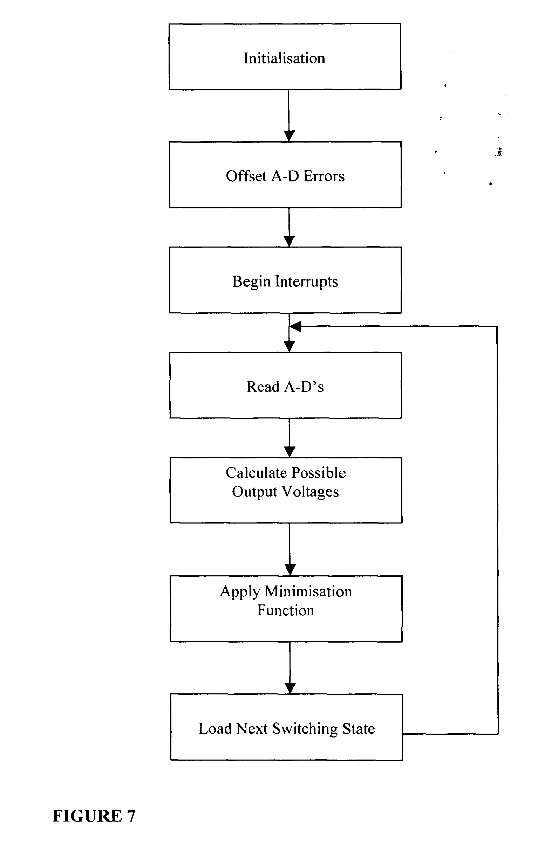

Figure 7 shows an overview of the DSP software. On start-up of the DSP, A-D offset reduction is performed, followed by configuration of COM ports. The DSP then begins the 40kHz interrupt cycle. At each interrupt the phase and resonant capacitor voltages are read and the optimum switch state for tank operation is calculated. The next switching state is then loaded and the switches configured accordingly via the gate drives.

Embodiments of the invention have the advantage of providing a direct power converter for high power RF applications which has reduced energy storage and higher energy density and provides a direct power converter which is suitable for high power RF supplies such as are used in accelerators for high energy physics and associated applications. Embodiments of the invention also have much broader application.

Accelerators used for experiments in high energy physics require a very high power RF source to provide the energy needed to accelerate the particles. The RF power must be stable and predictable such that any variation in the supplied RF power has a limited and acceptable impact on the accelerated beam quality. The use of a high frequency series resonant tank transformer coupled to a rectifier to produce a high voltage isolated DC supply is advantageous over prior art solutions which operate at 50/60 Hz. As well as being physically large, this prior art approach requires large output filters to meet output voltage requirements. These give rise to high energy storage, which requires management in the event on a tube fault and tube destruction is to be avoided.

Various modifications to the embodiment described are possible and will occur to those skilled in the art. For example, although not presently preferred, it is possible for the output to have more than one phase, in which case a resonant tank circuit as described is provided for each phase. Such an arrangement would use a polyphase rectifier and may have a set of switches for each phase. The input source need not be 3 phase and any other AC input is possible with an appropriate re-arrangement of the switch matrix. The scope of the invention is limited only by the following claims.

**Claims**

1.  An AC to DC converter comprising a resonant tank, a switchable converter comprising an array of bi-directional switches for driving the resonant tank, a rectifier coupled to the resonant tank, and a controller for controlling the resonant tank by controlling the state of the switchable converter on the basis of a predictive algorithm.

2.  An AC to DC converter according to claim 1, wherein the resonant tank is a series resonant parallel loaded tank.

3.  An AC to DC converter according to claim 1 or 2, wherein the switching converter converts a polyphase AC supply to a single phase supply to drive the resonant tank.

4.  An AC to DC converter according to claim 1, 2 or 3, wherein the switchable converter excites the resonant tank substantially at its resonant frequency.

5.  An AC to DC converter according to any preceding claim, wherein the resonant tank is transformer coupled to the rectifier.

6.  An AC to DC converter according to claim 4, wherein the resonant tank has a resonant frequency in the range of 2 - 200 kHz.

7.  An AC to DC converter according to any preceding claim, wherein the predictive algorithm is operable to select the switching state of the switchable converter to operate the resonant tank close to or substantially at a reference level.

8.  An AC to DC converter according to claim 7, wherein the controller selects the optimum one of a possible set of input voltages that may be applied to the resonant tank on the next tank half cycle and configures the switchable converter to provide the selected voltage to drive the resonant tank.

9.  An AC to DC converter according to claim 8, wherein the controller controls the resonant tank by application of sequences of states of the switchable converter.

10. An AC to DC converter according to claim 2, wherein the series resonant parallel loaded tank is an LC circuit and the capacitor of the tank is arranged in parallel with a transformer through which the resonant tank is coupled to the rectifier.

11. An AC to DC converter according to claim 10, wherein at least part of the inductance and capacitance of the LC circuit are provided by the transformer.

12. An AC to DC converter according to claim 10 or 11, wherein the series resonant parallel loaded tank comprises a blocking capacitor in series with the parallel loaded capacitor.

13. An AC to DC converter according to any preceding claim, wherein the switchable converter is switched to commutate between phases of the AC input at zero current crossing of the resonant tank.

14. An AC to DC converter according to any preceding claim, wherein the switchable converter converts a polyphase AC input to a single phase high frequency output to drive the resonant tank.

**15.** An AC to DC converter according to claim 14, wherein the switching network switches at substantially twice the resonant frequency of the resonant tank.

**FIGURE 1**

**FIGURE 2**

**FIGURE 3**

figure 4

Figure 5

**FIGURE 6**

```
┌─────────────────────────┐
│      Initialisation     │
└─────────────────────────┘
            │
            ▼
┌─────────────────────────┐
│     Offset A-D Errors   │
└─────────────────────────┘
            │
            ▼
┌─────────────────────────┐
│     Begin Interrupts    │
└─────────────────────────┘
            │
            ▼
┌─────────────────────────┐
│        Read A-D's       │
└─────────────────────────┘
            │
            ▼
┌─────────────────────────┐
│    Calculate Possible   │
│     Output Voltages     │
└─────────────────────────┘
            │
            ▼
┌─────────────────────────┐
│    Apply Minimisation   │
│        Function         │
└─────────────────────────┘
            │
            ▼
┌─────────────────────────┐
│  Load Next Switching State │
└─────────────────────────┘
```

**FIGURE 7**

## REFERENCES CITED IN THE DESCRIPTION

**Non-patent literature cited in the description**

- **M. VENTURINI ; A. ALESINA.** The generalised transformer: A new bidirectional sinusoidal waveform frequency converter with continuously adjustable input power factor. *Conf. Rec. IEEE PESC'80,* 242-252

- **WHEELER P W ; RODRIGUEZ J ; CLARE J C ; EMPRINGHAM L ; WEINSTEIN A.** Matrix converters: a technology review. *IEEE Transactions on Industrial Electronics,* vol. 49 (2), 276-288
- **SUL et al.** Design and Performance of a High-Frequency Link Induction Motor Drive Operating at Unity Power Factor. *IEEE Trans.Ind.Applicat.,* May 1990, vol. 26 (3), 434-440